# EUROPEAN PATENT APPLICATION

(11) **EP 1 269 862 A1**
(43) Date of publication of application: **02.01.2003**
(21) Application number: 01202379.2
(22) Date of filing: 20.06.2001
(51) Int. Cl.: A23L 1/40, A23L 1/29, A23L 1/314, A23L 1/22, A23L 1/325, A23L 1/237, A23P 1/02, A23P 1/08

(54) **Bouillon powder**

(71) Applicant: Société des Produits Nestlé S.A., 1800 Vevey (CH)
(72) Inventor: Palzer, Stefan, 8320 Fehraltorf (CH); Kappeler, Cecilia, 8484 Neschwil (CH); Enggist, Alfred, 8302 Kloten (CH); Harris, Brenda, 8422 Pfungen (CH)
(74) Representative: Wavre, Claude-Alain

(57) **Abstract**

A bouillon powder which comprises only or mainly oil and no or only little fat beside non fat conventional bouillon ingredients.

## Description

The present invention relates to a bouillon powder, especially a bouillon powder in single particle form, in granulated form or in agglomerated form and to a process for the production of a bouillon powder.

A conventional way of manufacturing a bouillon powder in single particle form comprises mixing powdered bouillon components with low amounts of oil and/or fat.

A conventional way of manufacturing a granulated bouillon powder comprises mixing powdered bouillon components with low amounts of oil and/or fat and compacting the mix into granules.

A conventional way of manufacturing an agglomerated bouillon powder comprises mixing powdered bouillon components with low amounts of oil and/or fat and agglomerating the single particles thus obtained into agglomerates.

Nowadays there is a nutritional trend to avoid or at least reduce consumption of fats rich in trans fatty acids and saturated fatty acids and to preferably consume healthy oils rich in monounsaturated fatty acids and/or polyunsaturated fatty acids such as sunflower, safflower, canola and/or olive oil, for example.

A first object of the present invention is to provide a free flowing bouillon powder which only or mainly contains oil, especially a healthy oil rich in monounsaturated fatty acids and/or polyunsaturated fatty acids, and no or only little fat beside non fat conventional bouillon ingredients.

A second object of the present invention is to provide a bouillon powder which has no or only little fat solidification after rehydratation with hot water when the rehydrated product is getting cold.

A third object of the present invention is to provide a bouillon powder which has an improved cold water solubility.

A fourth object of the present invention is to provide a process for manufacturing such a bouillon powder.

It has now been found that the first three objects of the present invention can be met by a bouillon powder, which comprises, in total powder weight %, from 1 to 20% of an oil and possibly fat, from 4 to 95% of a milled filler, and up to 95% of a non milled filler, and, in total oil and fat weight %, up to 80% or even up to 70%, preferably up to 60% or even up to 50%, more preferably up to 40% or even up to 30%, even more preferably up to 20% or even up to 10%, and still even more preferably up to only 5% fat, as well as optionally spices, flavours, and/or plant extracts.

The fourth object of the present invention can be met by a process for the production of a bouillon powder, which consists of preparing a premix of powdered constituents comprising, in total powder weight %, from 4 to 95% of a milled filler, up to 95% of a non milled filler, and optionally spices, flavours, and/or plant extracts, and atomising an emulsion comprising, in total powder weight %, from 1 to 20% of an oil and up to 4% of water onto the dry premix while further mixing, and wherein, in total oil and fat weight %, up to 80% or even up to 70%, preferably up to 60% or even up to 50%, more preferably up to 40% or even up to 30%, even more preferably up to 20% or even up to 10%, and still even more preferably up to only 5% fat are added to the dry premix and/or to the emulsion.

Throughout the present description, the expression "bouillon" is to be understood as meaning "bouillon and/or seasoning".

The expression "bouillon powder in single particle form" means "particles of bouillon powder directly obtained by mixing premix and oil".

The expression "bouillon powder in granulated form" means "granulated bouillon powder obtained by granulating a bouillon powder in single particle form".

The expression "bouillon powder in agglomerated form" means "agglomerated bouillon powder obtained by agglomerating a bouillon powder in single particle form".

The expression "oil" means "oil or mixture of oils which is liquid at room temperature and which more especially has a solid fat content (SFC) of less than 5% at 20°C".

The expression "milled filler" means "a powdered filler which has been milled to an especially fine granulometry or which has an especially fine granulometry".

The expression "non milled filler" means "a powdered filler which has not been milled to an especially fine granulometry or which does not have an especially fine granulometry".

Thus, it has surprisingly been found that it is possible to have up to 20% oil and no or only little amounts of hardened fat entrapped in the particles of a bouillon powder provided the particles also comprise a milled filler.

In this way, it is indeed possible to provide a bouillon powder which only or mainly contains oil, especially a healthy oil rich in monounsaturated fatty acids and/or polyunsaturated fatty acids, and no or only little fat beside non fat conventional bouillon ingredients.

Thus, the present invention also involves a method for improving the nutritional quality of a bouillon powder by at least partially replacing in the powder, fats which contain trans fatty acids and/or saturated fatty acids with oils rich in monounsaturated fatty acids and/or polyunsaturated fatty acids.

Moreover, the present invention further involves a method for reducing consumption of trans fatty acids and/or saturated fatty acids by administering a food product prepared from a bouillon powder in which fats which contain trans fatty acids and/or saturated fatty acids are at least partially replaced with oils rich in monounsaturated fatty acids and/or polyunsaturated fatty acids.

In addition, such a bouillon powder indeed has no or only little fat solidification after rehydratation with hot water when the rehydrated product is getting cold, and indeed has an improved cold water solubility.

In the present bouillon powder, the oil may be any food grade oil, especially a healthy oil such as sunflower oil, safflower oil, olive oil and/or canola oil, for example.

The fat may be palm fat, palmolein or chicken fat, for example.

The milled filler may be a milled crystalline ingredient such as salt (sodium chloride), glutamate and/or sugar (sucrose), for example.

Especially for the bouillon in single particle form, it may also be a fine powder of a porous ingredient such as maltodextrin and/or starch, which adsorbs the oil, for example.

A milled crystalline ingredient may have been milled to fine particles having a mean diameter of from 5 to 80 µm, for example.

The mean diameter is defined as a 50% limit (D50) in particle distribution whereby 50% by volume of the particles have a diameter below the 50% limit and 50% by volume of the particles have a diameter above the 50% limit.

Preferably, these fine particles also have a span of from 2.0 to 5.0.

The span is defined as the broadness or width in particle distribution between a 10% limit (D10) and a 90% limit (D90) divided by the mean particle diameter (D50), whereby 10% by volume of the particles have a diameter below the 10% limit and 10% by volume of the particles have a diameter above the 90% limit.

The so called non milled filler may be a powdered crystalline ingredient such as salt, glutamate and/or sugar which has not been milled to an especially fine granulometry but which comprises particles the mean diameter of which is of from about 100 to about 600 µm, preferably from about 200 to about 600 µm and more preferably from about 300 to about 500 µm, for example.

Optionally, dehydrated vegetables and/or herb leafs, for example, may be added to the granulated bouillon powder.

As stated above, the present process for the production of a granulated bouillon powder consists of preparing a premix of powdered constituents comprising, in total powder weight %, from 4 to 95% of a milled filler, up to 95% of a non milled filler, and optionally spices, flavours, and/or plant extracts, atomising an emulsion comprising, in total powder weight %, from 1 to 20% of an oil and up to 4% of water onto the dry premix while further mixing, wherein, in total oil and fat weight %, up to 80% or even up to 70%, preferably up to 60% or even up to 50%, more preferably up to 40% or even up to 30%, even more preferably up to 20% or even up to 10%, and still even more preferably up to only 5% fat are added to the dry premix and/or to the emulsion.

Preparing the premix may be carried out by means of any suitable traditional powder mixer such as a horizontal mixer with plough-shaped heads arranged on its horizontal shaft or a ribbon mixer, for example.

The oil may be atomised onto the dry premix through any adequate nozzle such as simple or a binary nozzle, for example. Further mixing preferably is combined with chopping in order to better agglomerate the oil with the milled filler.

The fat may be added either in solid form to the dry premix or in liquefied form to the emulsion, for example.

In a preferred embodiment for the production of a bouillon powder in granulated form, the present process further comprises atomising an emulsion comprising, in total powder weight %, from 1 to 20% of an oil and from 1 to 4% of water onto the dry premix while further mixing, granulating and drying.

Granulating may be carried out in any adequate granulator of the food industry such as a granulator manufactured by the company Alexanderwerk of Remscheid in Germany, for example.

In a preferred embodiment for the production of a bouillon powder in agglomerated form, the present process further comprises atomising an emulsion comprising, in total powder weight %, from 1 to 20% of an oil and from 1 to 4% of water onto the dry premix while further mixing, agglomerating and drying.

Agglomerating may be carried out in any adequate agglomerator of the food industry such as a fluidised bed agglomerator, for example.

An embodiment of the bouillon powder and of the process for producing it according to the present invention is illustrated in the following Example in which the percentages are by weight unless indicated to the contrary.

The Example is preceded by a short description of the method used for analysing the particle size of the milled filler.

### Method 1: Particle size analysis

The particle size of the milled filler was analysed by means of a laser diffraction particle sizer (MASTERSIZER S, Malvern Instruments Ltd., Malvern/GB), coupled with a fully automated, air pressure controlled dry powder feeder (GMP ultra) .

The result from the analysis was the relative distribution of volume of the particles in the range of size classes. Cumulative undersize curves and the following particle size distribution parameters were derived from these basic results:
**D50:** 50% limit = mean particle diameter (50% by volume of the particles had a diameter below D50 and 50% by volume of the particles had a diameter above D50)
**D10:** 10% limit (10% by volume of the particles had a diameter below D10)
**D90:** 90% limit (10% by volume of the particles had a diameter above D90)
**Span:** (D90-D10)/D50

### Example 1

A granulated, herb bouillon powder was produced which had the following composition:
- 47 % milled salt
- 33 % milled monosodium glutamate
- 12 % olive oil
- 6.5 % dehydrated powdered aromatics and spices
- 1.0 % colouring green plant extract solution
- 0.5 % dried herbs

The granulometry of the milled salt was as follows:
D10: 8.79 µm
D50: 44.45 µm
D90: 142.54 µm
Span: 3.0

The granulometry of the milled glutamate was as follows:
D10: 4.80 µm
D50: 27.27 µm
D90: 101.69 µm
Span: 3.55

The production process comprised the following steps:

The green plant extract solution was emulsified with the olive oil in a high pressure homogenisator or in a fast rotating stirrer.

The emulsion was atomised on a premix of the powdered ingredients in a ploughshare mixer with chopper.

The dried herbs were added in the very end.

The mixture thus obtained was granulated in an granulator from Alexanderwerke, Remscheid, Germany.

The granules thus obtained were then dried in a fluidised bed.

The granulated, herb bouillon powder thus obtained contained only olive oil, which is a healthy oil rich in monounsaturated fatty acids and/or polyunsaturated fatty acids, and no fat beside the non fat ingredients.

This powder had no fat solidification after rehydratation with hot water when it was then getting cold and it also was cold water soluble.

## Claims

1. A bouillon and/or seasoning powder, which comprises, in total powder weight %, from 1 to 20% of an oil and possibly fat, from 4 to 95% of a milled filler, and up to 95% of a non milled filler, and, in total oil and fat weight %, up to 80% or even up to 70%, preferably up to 60% or even up to 50%, more preferably up to 40% or even up to 30%, even more preferably up to 20% or even up to 10%, and still even more preferably up to only 5% fat, as well as optionally spices, flavours, and/or plant extracts.

2. A bouillon and/or seasoning powder according to claim 1, in which the oil is a healthy oil selected from a group comprising sunflower oil, safflower oil, olive oil and/or canola oil.

3. A bouillon and/or seasoning powder according to claim 1, in which the milled filler is a milled crystalline ingredient, especially a crystalline ingredient selected from a group comprising salt, glutamate and/or sugar.

4. A bouillon and/or seasoning powder according to claim 3, in which the milled crystalline ingredient comprises fine particles having a mean diameter of from 5 to 80 µm and a span of from 2.0 to 5.0.

5. A process for the production of a bouillon and/or seasoning powder, which consists of preparing a premix of powdered constituents comprising, in total powder weight %, from 4 to 95% of a milled filler, up to 95% of a non milled filler, and optionally spices, flavours, and/or plant extracts, and atomising an emulsion comprising, in total powder weight %, from 1 to 20% of an oil and up to 4% of water onto the dry premix while further mixing, wherein, in total oil and fat weight %, up to 80% or even up to 70%, preferably up to 60% or even up to 50%, more preferably up to 40% or even up to 30%, even more preferably up to 20% or even up to 10%, and still even more preferably up to only 5% fat are added to the dry premix and/or to the emulsion.

6. A process according to claim 5, for the production of a bouillon and/or seasoning powder in granulated form, which, after further mixing, further comprises granulating and drying.

7. A process according to claim 5, for the production of a bouillon and/or seasoning powder in agglomerated form, which, after further mixing, further comprises agglomerating and drying.

8. A method for improving the nutritional quality of a bouillon and/or seasoning powder by at least partially replacing in the powder, fats which contain trans fatty acids and/or saturated fatty acids with oils rich in monounsaturated fatty acids and/or polyunsaturated fatty acids.

9. A method for reducing consumption of trans fatty acids and/or saturated fatty acids by administering a food product prepared from a bouillon and/or seasoning powder in which fats which contain trans fatty acids and/or saturated fatty acids are at least partially replaced with oils rich in monounsaturated fatty acids and/or polyunsaturated fatty acids.
